# EUROPEAN PATENT SPECIFICATION

(11) **EP 3 950 646 B1**
(45) Date of publication and mention of the grant of the patent: **05.10.2022**
(21) Application number: 20189144.7
(22) Date of filing: 03.08.2020
(51) Int. Cl.: C05F 7/00, C05F 17/30, C05F 17/40, C05F 17/60, C05F 17/80, C05F 17/943

(54) **UNITS AND TECHNOLOGICAL LINE FOR PROCESSING MUNICIPAL SEWAGE SLUDGE AND ORGANIC WASTE FROM AGRICULTURE, FOOD AND PROCESSING INDUSTRIES**
EINHEITEN UND TECHNOLOGISCHE LEITUNG ZUR VERARBEITUNG VON KOMMUNALEM KLÄRSCHLAMM UND ORGANISCHEN ABFÄLLEN AUS DER LANDWIRTSCHAFT, DER LEBENSMITTELINDUSTRIE UND DER VERARBEITENDEN INDUSTRIE
UNITÉS ET LIGNE TECHNOLOGIQUE POUR LE TRAITEMENT DES BOUES MUNICIPALES ET DES DÉCHETS ORGANIQUES DES INDUSTRIES AGRICOLE, ALIMENTAIRE ET DE TRANSFORMATION

(43) Date of publication of application: 09.02.2022
(73) Proprietor: Vaysman, Vladyslav, 67851 Sangyika village, Odessa (UA); Strunnikova, Natalya, 5238259 Ramat Gan (IL); Bekker, Dmitri, River Vale, NJ 07675 (US); Kassien, Oleg, 22100 Mariehamn (FI)
(72) Inventor: Vaysman, Vladyslav, 67851 Sangyika village, Odessa (UA); Strunnikova, Natalya, 5238259 Ramat Gan (IL); Bekker, Dmitri, River Vale, NJ 07675 (US); Kassien, Oleg, 22100 Mariehamn (FI)
(74) Representative: Benatov, Samuil Gabriel

(56) References cited:
- WO-A1-96/09991
- US-A- 4 050 900
- US-A- 5 143 626
- US-A1- 2013 264 279

## Description

### FIELD OF THE INVENTION

The invention relates to devices for processing sewage sludge (SS), waste products of organisms, organic waste from agriculture, food and processing industries, for example - to devices that use compost as a biologically active component at the stage of ageing sewage sludge.

### STATE OF THE ART

The common way to use sewage sludge is composting, which is very time consuming. RU 2494083 and RU 2489414 disclose neutralization of pathogenic organisms in sludge by adding wood waste, straw, peat or similar fillers to the above-mentioned sludge. Decomposition of wood and other filler substances in the sludge mass (SS) leads to the release of a large amount of heat. The sludge mass is heated to a temperature of about 70°C, and this leads to disinfection of the sludge. The most important disadvantage of the compost preparation method is the long duration (several months) of this method. In countries with a warm climate, this technology is used all year round, while in countries with a long autumn-winter period, this technology can be used mainly in summer. The seasonal span of composting technology causes waste to accumulate in the cold season. Therefore, for the disposal of the accumulated waste, vast territories located far from populated areas have to be allocated.

To speed up the disinfection process, sewage sludge is heated and treated with chemicals, as well as irradiated with various radiation sources. It should be emphasized that heat treatment is an affordable and safe technology, because this type of technology can be carried out using simple and affordable equipment and without biological, radiation and other environmental hazards.

WO 2001122833 A1 discloses a method and systems for producing fertilizer from sewage sludge. The system consists of a disinfection chamber, where the disinfection of sewage sludge is carried out thermally, comprising a heater for thermal treatment of sewage sludge, and an ageing chamber, comprising manipulators for mixing the biologically active component with the disinfected sewage sludge. The disinfection chamber comprises a conveyor furnace with a belt conveyor. The use of inertial thermal elements requires high energy consumption, which leads to high requirements for the energy class of the equipment in combination with low efficiency. In addition, the belt conveyor of this system requires a large number of moving elements that impart a cyclic movement to the belt, which leads to high wear of the moving parts of the equipment, the need for frequent cleaning of the equipment, and low efficiency. In addition, uneven temperature gradient in the layer of disinfected material on the conveyor belt results in unstable pasteurization performance. Further systems utilized for processing organic waste are disclosed in US 5 143 626 A, WO 96/09991 A1 and US 2013/264279 A1.

### SUMMARY OF THE INVENTION

The object of the invention is to develop a new ageing unit according to claim 1 and a new technological line according to claim 5 for processing municipal sewage sludge (SS) and other organic waste into organic fertilizer, which is automated, energy-optimized, environmentally friendly, modular and mobile.

Another object of the invention is to develop a new pasteurization unit with a more efficient transport system.

An additional object of the invention is to develop a new pasteurization unit with air recuperation.

Another object of the invention is to develop a new ageing unit with increased efficiency.

These objects are achieved by the fact that a pasteurization unit comprises:
- a thermoconstant container with an autonomous climate system;
- a pasteurization chamber with a vibratory conveying system and heaters arranged along the vibratory conveying system in the form of a conveyor; wherein the heating elements are made in the form of fast-mountable infrared heating panels, which are - each a set of ceramic infrared heaters installed in a metal structure made in the form of a reflector;
- a material feeding device in the form of a feeder arranged at the beginning of the conveyor.

Preferably, the vibratory conveying system consists of a plurality of metal vibratory trays arranged with a tilt of 2.5-3 degrees, comprising a vibratory electromagnetic circuit and a resilient mechanical system capable of vibrating in a state of resonance, thus advancing the material in the direction of the tilt. Also, the vibratory conveying system is preferably equipped with vibroactuators having a main power circuit and an additional forced cooling circuit.

The vibratory conveying system can consist of several arranged in line similar devices, each of which is arranged lower than the previous one.

According to the invention, the material feeding device in the form of a feeder has a gap with a height corresponding to the thickness of the layer of pasteurized material, and the width of the feeder corresponds to the width of the tray.

The pasteurization unit can also comprise an air preparation and recuperation system, comprising a supply and exhaust ventilation system with filters, a recuperator, ventilation ducts, and a condensate collection and recovery system.

Also, the pasteurization unit may comprise an air circulation system, comprising at least one fan mounted in the ceiling of the pasteurization chamber, designed to mix air layers and equalize the temperature in the pasteurization chamber.

The advantages of the pasteurization unit are that it is a mobile device, safe for the user and the environment, which is based on a thermoconstant container with an autonomous climate system, which allows to quickly reach pre-set temperature indicators and maintain a stable temperature regime in the required temperature range.

At the same time, the used design of the vibratory conveying system and heaters is unique and has not been previously used for transportation and simultaneous heating of SS of different fractions, humidity and density. Such a design is optimal for interaction with an aggressive environment and does not break down quickly in comparison with other analogous designs.

The air circulation/recuperation system allows to mix air layers and to equalize temperature in the pasteurization chamber.

The objects of the invention are also achieved by the fact that the claimed ageing unit comprises:
- a thermoconstant container in which a technological bath is arranged,
- on the sides of the bath there are guides for moving a self-propelled platform, on which mixers with vertical screw conveyors are mounted, covering the entire cross-section of the bath;
- at the top of the chamber there is at least one sensor for monitoring loading and discharging,
- and in the bottom of the bath there is at least one discharging device arranged along the axis of the bath;
- wherein the ageing unit has a device for loading raw materials and a device for loading a biological activator.

In a preferred embodiment of the invention, the bottom of the technological bath has longitudinal-transverse tilts, and the mixers have screw conveyors of different height, the height of which corresponds to the cross-section of the bath.

Preferably, the discharge device has a gate valve and a sluice feeder connected to a high-pressure pipeline.

The ageing unit can also comprise air preparation and recuperation systems comprising a supply and exhaust ventilation system, a recuperator, ventilation ducts, a condensate conditioning, collection and recovery system.

A special characteristic of the ageing unit is a self-propelled platform with mixers, which allows to evenly distribute biologically active components, maintain the temperature and obtain uniform ageing of the mass throughout the entire volume of the chamber. The longitudinal-transverse tilts of the chamber allow for better mixing of the masses and to minimize areas where the mass can stagnate.

The objects of the invention are also achieved by the claimed technological line for processing municipal sewage sludge and other organic waste into organic fertilizer that comprises:
- a receiving hopper for organic waste;
- a pipeline system for feeding organic waste to pasteurization unit;
- a pasteurization unit according to the invention;
- a receiving hopper for pasteurized raw materials, arranged at the end of the conveyor of the pasteurization unit;
- at least one ageing unit according to the invention.
- a pipeline system for transporting pasteurized material from the receiving hopper for pasteurized raw materials to the ageing unit;
- a high-pressure pipeline system designed to transport the product from the ageing unit to product separation system;
- a product separation and discharge system.

Preferably, the pasteurization unit and the ageing unit are mounted in HQ 12.2 meter (40-foot) reefer containers.

Preferably, the technological line has five ageing units connected by common pipeline system for transporting pasteurized material and a common high-pressure pipeline system for transporting the product.

The technological line may comprise, after the receiving hopper for pasteurized raw materials, two or more in line screw pumps connected to the pipeline for delivering pasteurized raw materials to one of the five ageing units.

The advantages of the claimed technological line are that it is automated, energy-optimized and environmentally friendly. The pasteurization unit and ageing units are designed as separate, autonomous and mobile modules, which ensures the mobility of the system and makes it easy to install, remove and move the entire technological line.

### BRIEF DESCRIPTION OF THE DRAWINGS

The invention is explained in more detail by preferred embodiments, given as non-limiting the scope of the invention examples, with reference to the accompanying drawings, in which:
Fig. 1 is a schematic longitudinal section of a pasteurization unit;
Fig. 2 is a schematic representation of vibratory tray of the vibratory conveying system of the pasteurization unit: Fig. 2.1 - side view; Fig. 2.2 - plan view; Fig. 2.3 - front view; Fig. 2.4 - side view along B-B section in Fig.2.3;
Fig. 3 - schematic representation of the heating element of the pasteurization unit: Fig. 3.1 - side view; Fig. 3.2 - side view from the other side of the element; Fig. 3.3 - plan view; Fig. 3.4 - bottom view;
Fig. 4 is a schematic cross-sectional representation of an ageing unit;
Fig. 5 is a schematic representation of a technological line for processing municipal sewage sludge into organic fertilizer: Fig. 5.1 - side view; Fig. 5.2 - plan view.

### DETAILED DESCRIPTION

The technological line for processing municipal sewage sludge (SS) and other organic waste into organic fertilizer, in accordance with claim 5, comprises a pasteurization unit and at least one ageing unit according to claim 1.

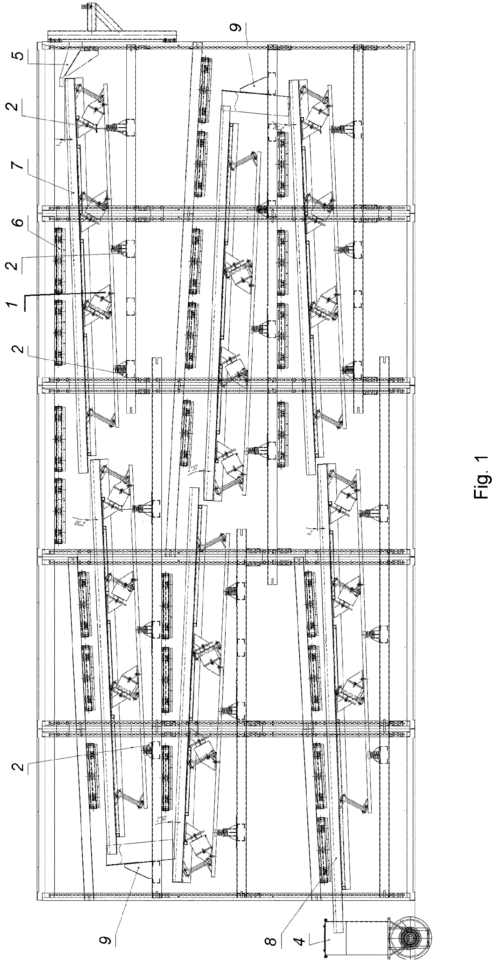

Fig. 1 shows a schematic view of a preferred embodiment of pasteurization unit according to the invention. The **pasteurization unit** is a thermoconstant container with an autonomous climate system.

The container contains a pasteurization chamber, where heat treatment and disinfection of sewage sludge is carried out. There is a vibratory conveying system in the pasteurization chamber which moves the sludge, with heaters 6 arranged on top and along the vibratory conveying system, which heat SS to 90 - 95°C.

The heating elements are in the form of quick-mountable infrared heating panels 6. Heating panels must cover most of the conveyor area to ensure uniform heating of the sludge. Each heating panel 6 is a set of ceramic infrared heaters 14 installed in a reflective metal structure 14. The heating panel 6 may have, for example, 6 kilowatts of electrical power. Other sources can be used also, but the infrared source is advantageous in that it is non-contact heater with high efficiency.

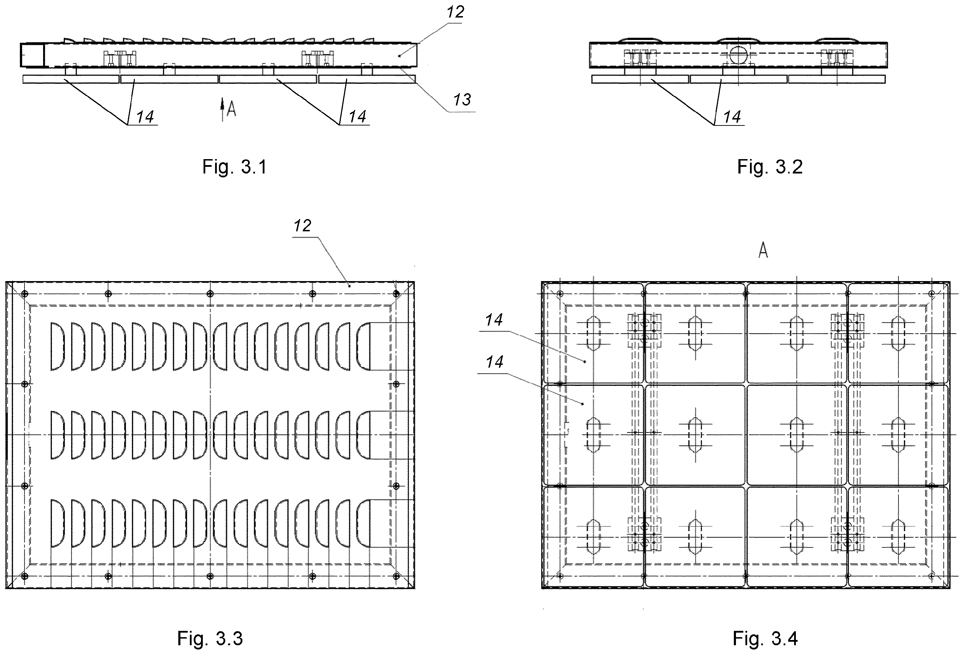

The heating panel 6 shown in fig. 3.1-3.4 consists of a profile frame 12 with reflectors 13 and infrared heaters 14.

The vibration method of movement is chosen, because other methods are associated with the presence of moving parts and mechanisms, such as a conveyor belt, rotating shafts, transmissions or a scraper conveyor, and so on, which are not suitable for interaction with an aggressive environment and quickly fail. A vibratory conveying system with a tilt for moving aggressive mass with variable viscosity, moisture and texture has not been previously used.

In a preferred embodiment of the pasteurization unit, the vibratory conveying system consists of several metal vibratory trays arranged with a tilt of 2.5-3 degrees. The tilt angle was selected experimentally, taking into account the fact that with a greater tilt, the product mass will fly off the surface of the tray and move uncontrollably along the direction of the tilt, and with a smaller tilt angle the mass will not move steadily along the conveyor.

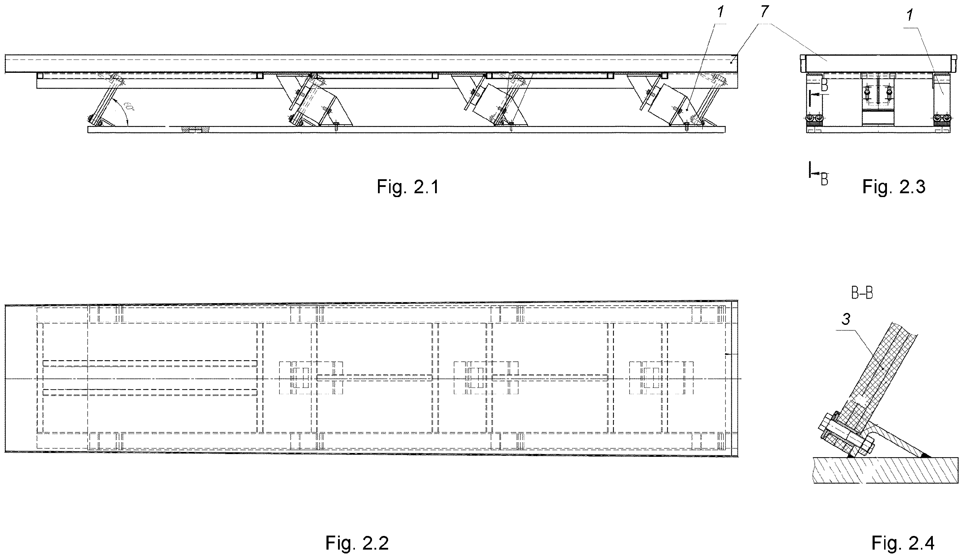

Each tray 7 (Fig. 2.1 - 2.4) comprises a vibratory electromagnetic circuit and a resilient mechanical system with spring supports 2, vibroactuators 1 and vibroactuator supports 3 capable of vibrating in a state of resonance, thus advancing the material in the direction of tilt. Vibrations have an industrial frequency of the level of 50 Hertz. The vibratory conveying system can be equipped with vibroactuators 1, which have a main power circuit and additional forced cooling circuit.

The conveyor of the vibratory conveying system can be composed of several arranged in line similar devices (trays), wherein each subsequent tray is arranged below the previous one (Fig. 1). The trays can be arranged on several levels (tiers), and reflective screens 9 can be located between the tiers, so that when the mass moves along the tray and drops to the lower levels it does not fly forward and to the sides. In this configuration, the length of the conveyor can be, for example, up to 15 meters. The speed of sludge advancement should ensure thermal treatment of the sludge for at least 15 minutes, necessary for its reliable pasteurization at the temperatures indicated above. Preferably, the length of the conveyor should ensure that a total volume of raw materials of at least 1 cubic meter of incoming SS per hour is pasteurized. In this sense, if the length of the conveyor is 15 meters, then the speed of sludge advancement should be about 1 meter per minute.

There is a material feeding device in the form of a feeder 5 at the beginning of the conveyor. Preferably, the feeder 5 has a gap with a height corresponding to the thickness of the layer of pasteurized material, and the width of the feeder 5 corresponds to the width of the tray.

At the end of the conveyor, a long discharge tray 8 can be located for discharge of pasteurized material (disinfected sludge) into the receiving hopper 4.

The container also has an air circulation system, which comprises at least one fan mounted in the ceiling of the pasteurization chamber, designed to mix the air layers and equalize the temperature in the pasteurization chamber. Mixing the air helps to ensure uniform humidity and temperature parameters in the pasteurization chamber.

The container also has an air preparation and recuperation system, comprising a supply and exhaust ventilation system with filters, a recuperator, ventilation ducts, a water condensate collection and recovery system. Filtration is carried out by coarse-mesh air inlet and outlet filters (dust filters). The recuperation system provides thermal exchange between two non-mixing air streams: the heated gas-air mixture exiting the pasteurization chamber, and atmospheric air entering the pasteurization chamber. Thus, a removal of evaporated moisture is achieved with a significant decrease in energy losses, which increases the efficiency of the pasteurization process.

In an exemplary embodiment shown in Figure 1, the housing of the pasteurization chamber consists of ten freestanding cabinets combined in two lines of five cabinets, with one fan mounted in the ceiling of each cabinet, which mixes the air. The walls of the housing of the pasteurization chamber are preferably made of a heat-resistant transparent material. The transparent chamber of the housing allows to visually observe the pasteurization process, without breaking air-tightness of the pasteurization chamber, and preventing unnecessary heat loss and leakage of biologically hazardous agents. Inside the housing of the pasteurization chamber, at three levels, there are two parallel lines of the vibratory conveying system, each of which consists of several trays. Infrared sources in the form of heating panels 6 are arranged above the trays of the vibratory conveying system. The number and dimensions of the vibratory conveying system cabinets, namely two rows of five cabinets, allow to achieve the optimal length of the vibratory conveying system of 15 meters, which is necessary for reliable fast pasteurization. The number of cabinets is not essential and differs only in overall dimensions criteria for the passage section and was chosen for the convenience of the system operator as a compromise between the number of cabinets and their lifting and installation ease at the workspace.

Above the two parallel lines of the vibratory conveying system, heating panels 6 are arranged in pairs, covering most of the area of the trays. Moreover, a thermocouple is installed in each of the heating panels, which helps to fix the heating temperature of each panel.

In the interceiling space of the pasteurization chamber, there are ten valve-type fans, which are designed to mix the air. The fans should be located in the ceiling, because the highest temperature is there. Due to the cyclic movement of air masses and controlled intake of atmospheric air, equalization and stabilization of temperature throughout the entire chamber volume is achieved.

The **ageing unit,** in which the disinfected sludge is kept, in accordance with the invention comprises a technological bath, self-propelled mixing elements and a discharge system.

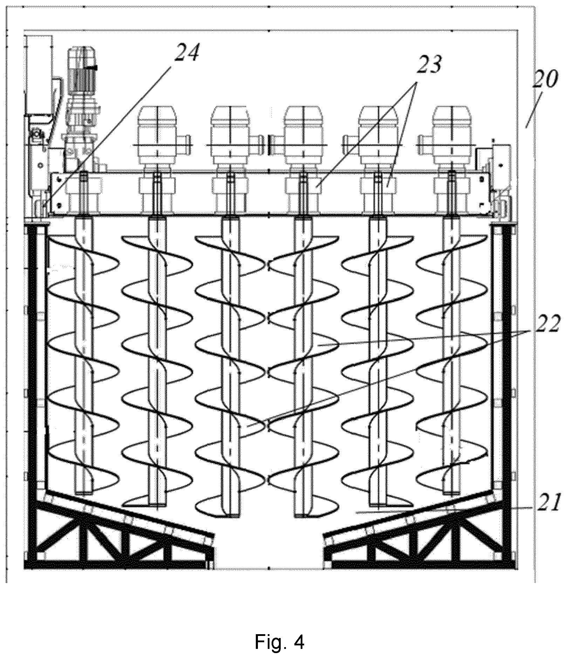

Fig. 4 shows an interior view of an exemplary embodiment of an ageing unit. The ageing unit is a thermoconstant container 20, if necessary, equipped with an autonomous climate system. The container contains technological bath 21, the bottom of which preferably has longitudinal-transverse tilts. Bath 21 with flat bottom is also possible. The disinfected sludge mixing with activator, further mixing and ageing of the product are carried out in the bath 21. For this, the ageing unit has mixing elements in the form of a self-propelled platform, on which mixers 23 with vertical screw conveyors 22 are mounted, the height of which corresponds to the cross-section of the bath 21, and they cover the entire cross-sectional area of the working volume of the bath. In the version of flat-bottomed bath, equal-height screw conveyors 22 are used, and in the version of bath with tilts, unequal-height screw conveyors 22 are used (as in Fig. 4). On the sides of the bath 21 and longitudinally there are horizontal guides in the form of, for example, rail actuators 24 along which the self-propelled platform moves.

To control the loading and discharge of the sludge, at least one bath filling sensor is installed in the upper part of the container. These are preferably non-contact ultrasonic sensors. Strain gauge or infrared sensors can also be installed.

At the bottom of the bath, at least one discharge device is installed, arranged along the axis of the bath 21. Preferably, the discharge device is a gate valve and a sluice feeder connected to a high-pressure pipeline 11.

In addition, the ageing unit has devices for loading raw materials and devices for loading a biological activator, comprising a system of pipes and pumps. The raw material is loaded, for example, by screw pumps, and the biological activator, as a dry matter, by pneumatic pumps. Pneumatic pumps are mainly needed only for the initial loading of the activator and can be carriable (mobile).

The ageing unit has an air preparation and recuperation system comprising a supply and exhaust ventilation system with filters, a recuperator, ventilation ducts, a condensate collection and recovery system.

In the exemplary embodiment shown in Fig. 4, the self-propelled platform is positioned at a height of up to 1300 mm and ultrasonic sensors are installed along the container. The sensors are contactless and arranged longitudinally (arranged on the ceiling along the unit), and measure the level of filling of the bath (transverse measurement).

The ageing unit preferably has four discharge devices.

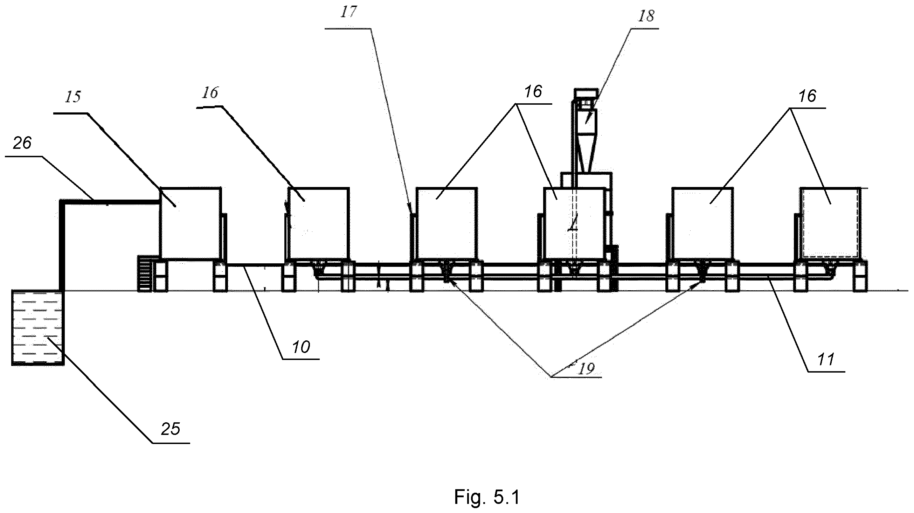

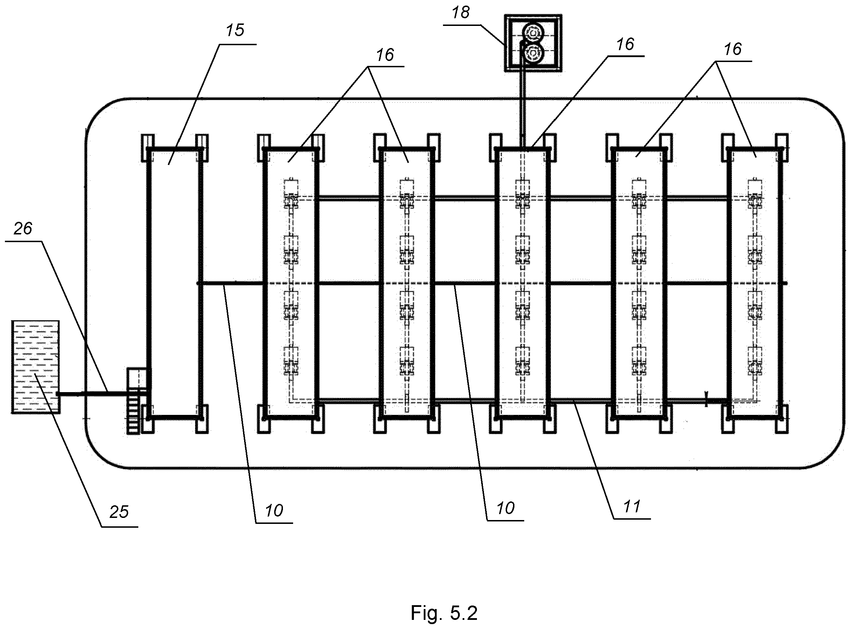

The technological line in accordance with the invention is intended for processing municipal sewage sludge (SS), waste products of organisms, organic waste from agriculture, food and processing industries into organic fertilizer. An exemplary embodiment of the invention shown in Figures 5.1 and 5.2 is a technological line for processing SS, comprising:
- a SS receiving hopper 25;
- a pipeline system for supplying SS 26 to pasteurization unit;
- a pasteurization unit 15 according to the invention;
- a receiving hopper for pasteurized raw materials 4;
- a pipeline system for transporting pasteurized material 10 from the receiving hopper for pasteurized raw material 4 to the ageing unit 16;
- at least one ageing unit 16 according to the invention;
- a high-pressure pipeline system 11, designed to transport the product from the ageing unit 16 to the product separation system;
- a product separation and discharge system.

Preferably, the pasteurization unit and the ageing unit/units are mounted in HQ 12.2 meter (40-foot) reefer containers. This allows the system to be mobile and allows easy installation, removal and relocation of the entire technological line.

In the exemplary embodiment of the technological line shown in Figures 5.1 and 5.2, there is one pasteurization unit 15 and five ageing units 16, connected by a common pipeline system for transporting pasteurized material (sludge) 10 and a common high-pressure pipeline system 11 designed to transport the product (fertilizer). The number of ageing units 16 is optimized for the number of days of fertilizer average ageing period. But, in principle, there may be fewer or more such units. To supply SS to the pasteurization unit 15, the technological line may comprise, for example, a screw pump. For transportation of pasteurized sludge, after the receiving hopper 4, the technological line has two or more consecutive screw pumps connected to the pipeline 10 for alternately delivering pasteurized sludge to one of five ageing units 16. Screw pumps are located inside the pipeline. The number of pumps depends on how far away the ageing unit is. Alternate delivery depends on the ageing cycle. Each ageing unit 16 has a gate valve with an electromechanical gearing 17 for adjusting the supply of pasteurized material.

The product/fertilizer separation and discharge system comprises a cyclone collector 18 and a packaging machine. The cyclone collector 18 effectively separates fertilizer particles from the air-gas mixture.

A mobile emergency discharge system can be provided for the ageing unit, for example, a flexible screw conveyor as carriable equipment.

The operation of the system is carried out as follows based on the example of the technological line shown in Figures 5.1 and 5.2, which comprise one pasteurization unit shown in Figure 1 and five ageing units shown in Figure 4.

A screw pump supplies SS through pipeline 26 directly to the pasteurization unit 15. In the pasteurization unit 15, the transported raw material is picked up by the next screw pump with finer control and the direction of the raw material is changed to perpendicular. In the process of filling the pasteurization unit, under perpendicular movement the raw material is divided into two flows, which are respectively directed to the right and left halves of the pasteurization line using a special mechanical device.

Further, through the feeders 5, the raw material enters the first trays 7 of the upper level of the two parallel lines of the vibratory conveying system. Through the feeder 5, the SS is evenly distributed over the entire plane of the tray 7 in a layer about 15 mm thick. The specified thickness is provided due to the design of the feeder 5 in which the gap is 1.5 cm high, and the width of the feeder 5 corresponds to the width of the tray 7 or is slightly less. The raw material enters the trays 7 and then moves steady, in an approximately level layer at approximately the same speed; it moves to tray 7 of one level, and from the tray 7 of one level to the tray 7 of another level under the action of gravity force sequentially from the upper level to the middle level, in the same way from the middle level to the lower level and then enters the receiving hopper 4.

While moving along the levels of trays, the raw materials are irradiated all the time by infrared radiation from the heating panels 6 for pasteurization and are heated to a temperature of about 90 - 95°C, ensuring the time required for guaranteed pasteurization and uniform heating of the sludge volume throughout the entire layer thickness.

The processed raw material enters the receiving hopper 4 already pasteurized with a reduced percentage of moisture in comparison with the initial state.

From the receiving hopper 4, by means of two in line screw pumps, the material is delivered by pipeline 10 alternately to one of five ageing units 16. The level of raw materials in the ageing unit bath is monitored using ultrasonic sensors and visual control.

Since the technological cycle of ageing is five days, the pasteurized raw material is first loaded for 1 day in the first ageing unit, then it switches sequentially to the second, third, fourth, fifth ageing unit.

At this time, the ageing process is completed in the first ageing unit 16 and with the help of pneumatic transport and a high-pressure fan 19 through the open gate valve and sluice feeder, the final product is fed into the pipeline 11 and sent to the cyclone collector 18, which is part of the product separation and discharge system. Raw materials from the cyclone collector 18 are automated or manually filled into final packaging.

Thus, the proposed device is environmentally friendly, fast and continuous, which makes it possible to create an integrated (full cycle) automated sludge processing system.

Reference numbers of the technical features are included in the claims for the sole purpose of increasing the intelligibility of the claims

## Claims

1. An ageing unit comprising:
- a thermoconstant container (20), in which a technological bath (21) is arranged,
- on the sides of the bath (21) there are guides (24) for moving a self-propelled platform, on which mixers (23) with vertical screw conveyors (22) are mounted, covering the entire cross-section of the bath;
- at the top of the chamber there is at least one sensor for monitoring loading and discharging,
- and in the bottom of the bath 21 there is at least one discharging device arranged along the axis of the bath;
- wherein the unit has a device for loading raw materials and a device for loading a biological activator.

2. The ageing unit according to claim 1, **characterized in that** the bottom of the technological bath (21) has longitudinal-transverse tilts, and the mixers (23) have screw conveyors of different height (22), the height of which corresponds to the cross-section of the bath.

3. The ageing unit according to claim 1, **characterized in that** the discharge device has a gate valve and a sluice feeder connected to a high-pressure pipeline (11).

4. The ageing unit according to claim 1, **characterized in that** it comprises an air preparation and recuperation system, comprising a supply and exhaust ventilation system, a recuperator, ventilation ducts, a condensate conditioning, collection and recovery system.

5. A technological line for processing municipal sewage sludge and other organic waste into organic fertilizer, comprising:
- a receiving hopper for organic waste (25);
- a pipeline system for feeding organic waste (26) to a pasteurization unit;
- a pasteurization unit (15), comprising:
- a thermoconstant container with an autonomous climate system;
- a pasteurization chamber with vibratory conveying system and heaters arranged along the vibratory conveying system in the form of a conveyor; wherein, the heating elements are made in the form of fast-mountable infrared heating panels (6), each of which is a set of ceramic infrared heaters (14) installed in a metal structure made in the form of a reflector (12, 13);
- a material feeding device in the form of a feeder (5) arranged at the beginning of the conveyor;
- a receiving hopper for pasteurized raw material (4), arranged at the end of the conveyor of the pasteurization unit (15);
- at least one ageing unit (16) according to claims 1 to 4;
- a pipeline system for transporting pasteurized material (10) from the receiving hopper for pasteurized raw material (14) to the ageing unit (16);
- a high-pressure pipeline system (11), designed to transport the product from the ageing unit to product separation system;
- a product separation and discharge system.

6. The technological line according to claim 5, **characterized in that** the vibratory conveying system of the pasteurization unit (15) consists of several metal vibratory trays (7) arranged with a tilt of 2.5-3 degrees, comprising a vibratory electromagnetic circuit and a resilient mechanical system capable of vibrating in a state of resonance, thus moving the material in direction of the tilt.

7. The technological line according to claim 6, **characterized in that** the vibratory conveying system is equipped with vibroactuators (1) having a main power circuit and an additional forced cooling circuit.

8. The technological line according to claims 5-7, **characterized in that** the vibratory conveying system consists of several arranged in line similar devices, each of which is lower than the previous one.

9. The technological line according to claim 5, **characterized in that** in the pasteurization unit (15) the material feeding device in the form of a feeder (5) has a gap with a height corresponding to the thickness of the layer of pasteurized material, and the width of the feeder corresponds to the width of the tray (7).

10. The technological line according to claim 5, **characterized in that** the pasteurization unit (15) also comprises an air preparation and recuperation system, comprising a supply and exhaust ventilation system with filters, a recuperator, ventilation ducts, a condensate collection and recovery system.

11. The technological line according to claim 5, **characterized in that** the pasteurization unit (15) also comprises an air circulation system comprising at least one fan mounted in the ceiling of the pasteurization chamber, designed to mix air layers and equalize the temperature in the pasteurization chamber.

12. The technological line according to any of the previous claims from 5 to 11, **characterized in that** the pasteurization unit (15) and the ageing unit (16) are mounted in HQ 12.2 meter (40-foot) reefer containers.

13. The technological line according to any of the previous claims from 5 to 12, **characterized in that** there are 5 ageing units (16) connected by common pipeline system for transporting pasteurized material (10) and a high-pressure pipeline system (11) for transporting the product.

14. The technological line according to claim 13, **characterized in that** after the receiving hopper (4) for pasteurized raw material it comprises two or more in line screw pumps connected to the pipeline for delivering pasteurized raw material (10) to one of the five ageing units.

## Patentansprüche

1. Alterungseinheit, umfassend:
- einen Thermokonstantbehälter (20), in dem ein technologisches Bad (21) angeordnet ist,
- an den Seiten des Bades (21) befinden sich Führungen (24) zum Bewegen einer selbstfahrenden Plattform, auf der Mischer (23) mit vertikalen Schneckenförderern (22) montiert sind, die den gesamten Querschnitt des Bades abdecken;
- am oberen Ende der Kammer befindet sich mindestens ein Sensor zur Überwachung der Befüllung und Entleerung,
- und im Boden des Bades 21 mindestens eine in der Achse des Bades angeordnete Austragsvorrichtung;
- wobei die Einheit eine Vorrichtung zum Beladen von Rohstoffen und eine Vorrichtung zum Beladen eines biologischen Aktivators aufweist.

2. Alterungsanlage nach Anspruch 1, **dadurch gekennzeichnet, dass** der Boden des technologischen Bades (21) Längs-Quer-Neigungen aufweist und die Mischer (23) Förderschnecken unterschiedlicher Höhe (22) haben, deren Höhe dem Querschnitt des Bades entspricht.

3. Alterungseinheit nach Anspruch 1, **dadurch gekennzeichnet, dass** die Austragsvorrichtung einen Schieber und einen Hochdruckleitung (11) angeschlossenen Schleusenbeschicker aufweist.

4. Alterungseinheit nach Anspruch 1, **dadurch gekennzeichnet, dass** sie ein Luftaufbereitungs- und Rückgewinnungssystem umfasst, das ein Zu- und Abluftsystem, einen Rekuperator, Lüftungskanäle, ein Kondensataufbereitungs-, Sammel- und Rückgewinnungssystem umfasst.

5. Technologische Linie zur Verarbeitung von kommunalem Klärschlamm und anderen organischen Abfällen zu organischem Dünger, umfassend:
- einen Aufnahmetrichter für organische Abfälle (25);
- ein Rohrleitungssystem zum Zuführen von organischem Abfall (26) zu einer Pasteurisierungseinheit;
- eine Pasteurisierungseinheit (15), umfassend:
- ein thermokonstanter Behälter mit einem autonomen Klimasystem;
- eine Pasteurisierungskammer mit einem Vibrationsfördersystem und Heizelementen, die entlang des Vibrations för der systems in Form eines Förderers angeordnet sind; wobei die Heizelemente in Form von schnell montierbaren Infrarot-Heizpaneelen ausgeführt sind;
- eine am Anfang des Förderers angeordnete Materialzuführungsvorrichtung in Form eines Zubringers (5);
- einen Aufnahmetrichter für pasteurisiertes Rohmaterial (4), der am Ende des Förderers der Pasteurisierungseinheit (15) angeordnet ist;
- mindestens eine Alterungseinheit (16) nach den Ansprüchen 1 bis 4;
- ein Rohrleitungssystem zum Transportieren von pasteurisiertem Material (10) von dem Aufnahmetrichter für pasteurisiertes Rohmaterial (14) zu der Reifungseinheit (16);
- ein Hochdruck-Rohrleitungssystem (11), zum Transport des Produkts von der Reifungseinheit zum Produkttrennsystem;
- ein System zur Trennung und Entleerung des Produkts.

6. Technologische Linie nach Anspruch 5, **dadurch gekennzeichnet, dass** das Vibrationsfördersystem der Pasteurisierungseinheit (15) aus mehreren Metallvibrationsswannen (7) besteht, die mit einer Neigung von 2,5-3 Grad angeordnet sind, einen elektromagnetischen Vibrationskreis und a belastbares mechanisches System, das in der Lage ist, in Resonanz zu schwingen und so das Material in Richtung der Neigung zu bewegen.

7. Technologische Anlage nach Anspruch 6, **dadurch gekennzeichnet, dass** das Schwingfördersystem mit Vibrationsaktuatoren (1) ausgestattet ist, die einen Hauptstromkreis und einen zusätzlichen Zwangskühlkreis aufweisen.

8. Die technologische Linie nach den Ansprüchen 5-7, **dadurch gekennzeichnet, dass** das Vibrationsfördersystem aus mehreren hintereinander angeordneten gleichartigen Vorrichtungen besteht, von denen jede niedriger ist als die vorhergehende.

9. Technologische Linie nach Anspruch 5, **dadurch gekennzeichnet, dass** in der Pasteurisierungseinheit (15) die Materialzufuhrvorrichtung in Form einer Zuführung (5) einen Spalt mit einer Höhe aufweist, die der Dicke der Schicht des pasteurisiertem Material entspricht, und die Breite der Zuführung der Breite des Schale (7) entspricht.

10. Technologische Linie nach Anspruch 5, **dadurch gekennzeichnet, dass** die Pasteurisierungseinheit (15) auch ein Luftaufbereitungs- und Rückgewinnungssystem umfasst, das ein Zu- und Abluftsystem mit Filtern, einen Rekuperator, Lüftungskanäle, ein Kondensatsammel- und Rückgewinnungssystem umfasst.

11. Technologische Linie nach Anspruch 5, **dadurch gekennzeichnet, dass** die Pasteurisierungseinheit (15) auch ein Luftzirkulationssystem umfasst, das mindestens einen in der Decke der Pasteurisierungskammer montierten Ventilator umfasst, der dazu bestimmt ist, Luftschichten zu mischen und die Temperatur in der Pasteurisierungskammer auszugleichen.

12. Technologische Linie nach einem der vorhergehenden Ansprüche von 5 bis 11, **dadurch gekennzeichnet, dass** die Pasteurisierungseinheit (15) und die Reifungseinheit (16) in HQ 12,2 Meter (40 Fuß) Kühlcontainern montiert sind.

13. Technologische Linie nach einem der vorhergehenden Ansprüche 5 bis 12, **dadurch gekennzeichnet, dass** es 5 Reifungseinheiten (16) gibt, die durch ein gemeinsames Rohrleitungssystem zum Transport von pasteurisiertem Material (10) und einem Hochdruck-Rohrleitungssystem (11) verbunden sind. für den Transport des Produkts.

14. Technologische Linie nach Anspruch 13, **dadurch gekennzeichnet, dass** sie nach dem Aufnahmetrichter (4) für pasteurisiertes Rohmaterial umfasst zwei oder mehr Schneckenpumpen umfasst, die mit der Rohrleitung verbunden sind, um pasteurisiertes Rohmaterial (10) zu einer der fünf Reifungseinheiten zu befördern.

## Revendications

1. Une unité de vieillissement comprenant :
- un récipient thermoconstant (20), dans lequel est disposé un bain technologique (21),
- sur les côtés du bain (21) se trouvent des guides (24) pour déplacer une plate-forme autoopropulsée, sur laquelle sont montés des mélangeurs (23) avec des convoyeurs à vis verticaux (22), couvrant toute la section transversale du bain ;
- au sommet de la chambre se trouve au moins un capteur pour surveiller le chargement et le déchargement,
- et dans le fond du bain 21 se trouve au moins un dispositif de déchargement disposé le long de l'axe du bain ;
- dans lequel l'unité comporte un dispositif de chargement de matières premières et un dispositif de chargement d'un activateur biologique.

2. Une unité de vieillissement selon la revendication 1, **caractérisée en ce que** le fond du bain technologique (21) présente des inclinaisons longitudinales-transversales, et les mélangeurs (23) présentent des convoyeurs à vis de différentes hauteurs (22), dont la hauteur correspond à la section transversale du bain.

3. Une unité de vieillissement selon la revendication 1, **caractérisée en ce que** le dispositif de décharge comporte un robinet-vanne et un sas d'alimentation relié à une canalisation haute pression (11).

4. Une unité de vieillissement selon la revendication 1, **caractérisée en ce qu'**elle comprend un système de préparation et de récupération de l'air, comprenant un système de ventilation d'alimentation et de décharge , un récupérateur, des conduits de ventilation, un système de conditionnement, de collecte et de récupération des condensats.

5. Une ligne technologique de transformation des boues d'épuration municipales et d'autres déchets organiques en engrais organique, comprenant :
- une trémie de réception des déchets organiques (25) ;
- un système de canalisation pour amener les déchets organiques (26) à une unité de pasteurisation ;
- une unité de pasteurisation (15), comprenant :
- un conteneur thermoconstant avec un système de climatisation autonome ;
- une chambre de pasteurisation avec système de transport vibrant et des éléments chauffants disposés le long du système de transport vibrant sous la forme d'un convoyeur ; dans lequel, les éléments chauffants sont réalisés sous la forme de panneaux chauffants infrarouges à montage rapide (6), dont chacun est un ensemble d'éléments chauffants infrarouges en céramique (14) installés dans une structure métallique réalisée sous la forme d'un réflecteur (12, 13)
- un dispositif d'alimentation en matière sous la forme d'un alimentateur (5) disposé au début du convoyeur ;
- une trémie de réception de la matière première pasteurisée (4), disposée à l'extrémité du convoyeur de l'unité de pasteurisation (15) ;
- au moins une unité de vieillissement (16) selon les revendications 1 à 4 ;
- un système de canalisation pour transporter la matière pasteurisée (10) de la trémie de réception de la matière première pasteurisée (14) à l'unité de vieillissement (16) ;
- un système de canalisation à haute pression (11), conçu pour transporter le produit de l'unité de vieillissement au système de séparation du produit ;
- un système de séparation et de décharge des produits.

6. La ligne technologique selon la revendication 5, **caractérisée en ce que** le système de transport vibrant de l'unité de pasteurisation (15) consiste en plusieurs plateaux vibrants métalliques (7) disposés avec une inclinaison de 2,5-3 degrés, comprenant un circuit électromagnétique vibrant et un système mécanique élastique capable de vibrer dans un état de résonance, déplaçant ainsi le matériau dans le sens de l'inclinaison.

7. La ligne technologique selon la revendication 6, **caractérisée en ce que** le système de transport vibrant est équipé de vibro-actionneurs (1) comportant un circuit d'alimentation principal et un circuit de refroidissement forcé supplémentaire.

8. La ligne technologique selon les revendications 5 à 7, **caractérisée en ce que** le système de transport vibrant est constitué de plusieurs dispositifs similaires disposés en ligne, dont chacun est plus bas que le précédent.

9. La ligne technologique selon la revendication 5, **caractérisée en ce que** dans l'unité de pasteurisation (15) le dispositif d'alimentation en matière sous la forme d'un alimentateur (5) présente un interstice d'une hauteur correspondant à l'épaisseur de la couche de matière pasteurisée, et la largeur de l'alimentateur correspond à la largeur du plateau (7).

10. La ligne technologique selon la revendication 5, **caractérisée en ce que** l'unité de pasteurisation (15) comprend également un système de préparation et de récupération de l'air, comprenant un système de ventilation d'alimentation et d'évacuation avec des filtres, un récupérateur, des conduits de ventilation, un système de collecte et de récupération des condensats.

11. La ligne technologique selon la revendication 5, **caractérisée en ce que** l'unité de pasteurisation (15) comprend également un système de circulation d'air comprenant au moins un ventilateur monté dans le plafond de la chambre de pasteurisation, conçu pour mélanger les couches d'air et égaliser la température dans le chambre de pasteurisation.

12. La ligne technologique selon l'une quelconque des revendications précédentes de 5 à 11, **caractérisée en ce que** l'unité de pasteurisation (15) et l'unité de vieillissement (16) sont montées dans des conteneurs frigorifiques HQ de 12,2 mètres (40 pieds).

13. La ligne technologique selon l'une quelconque des revendications précédentes de 5 à 12, **caractérisée en ce qu'**il y a 5 unités de vieillissement (16) reliées par un système de canalisation commun pour le transport de la matière pasteurisée (10) et un système de canalisation à haute pression (11) pour le transport du produit.

14. La ligne technologique selon la revendication 13, **caractérisée en ce qu'**après la trémie de réception (4) pour la matière première pasteurisée, elle comprend deux ou plusieurs pompes à vis en ligne connectées au pipeline pour délivrer la matière première pasteurisée (10) à l'une des cinq unités de vieillissement.
